# FASCICULE DE BREVET EUROPEEN

(11) **EP 0 493 996 B1**
(45) Date de publication et mention de la délivrance du brevet: **05.04.2000**
(21) Numéro de dépôt: 91403377.4
(22) Date de dépôt: 12.12.1991
(51) Int. Cl.: B01D 57/02, G01N 27/26

(54) **Dispositif pour l'application d'échantillons biologiques sur une plaque d'électrophorèse**
Vorrichtung zum Aufbringen von biologischen Proben auf eine Elektrophoreseplatte
Apparatus for applying of biological samples to an electrophoresis plate

(30) Priorité: 04.01.1991 FR 9100092
(43) Date de publication de la demande: 08.07.1992
(60) Demande divisionnaire: 99100556.2
(73) Titulaire: SEBIA, 92130 Issy-Les-Moulineaux (FR)
(72) Inventeur: Bellon, Franck, F-91160 Longjumeau (FR)
(74) Mandataire: Desaix, Anne

(56) Documents cités:
- FR-A- 2 347 674
- GB-A- 1 446 125
- US-A- 3 855 846
- US-A- 3 930 973

## Description

L'invention a pour objet un dispositif pour l'application d'échantillons biologiques sur une plaque d'électrophorèse et avantageusement sur un gel d'électrophorèse.

Les techniques d'électrophorèse de zone sur gel d'agarose ont pour but de fractionner les constituants protéiques d'un échantillon biologique tel que sérum, urine, liquide céphalo-rachidien, etc, en les soumettant à l'action d'un champ électrique dans un milieu gélifié et contenant une solution tampon. A un pH déterminé, généralement basique, les protéines qui sont des molécules amphotères s'ionisent et vont se séparer selon leur charge respective. La finesse des bandes obtenues après électrophorèse et donc le pouvoir de résolution de la technique dépend principalement de la finesse du dépôt.

En effet, si en isoélectrofocalisation, en isotachophorèse ou en électrophorèse en gradient d'acrylamide ou encore en électrophorèse en gel d'acrylamide (par utilisation d'un "stacking gel"), on peut obtenir une focalisation des fractions par l'électrophorèse elle-même, en électrophorèse de zone, par exemple sur gel d'agarose seul un dépôt très fin permet d'obtenir des fractions très focalisées.

Pour effectuer les dépôts en vue de l'électrophorèse, on peut utiliser des peignes en matière plastique dont les dents portent une gorge qui permet de récupérer une goutte d'échantillon biologique d'un volume d'environ 0,3 à 2 µl, mais d'une part la goutte est d'une dimension telle qu'elle ne permet généralement pas un dépôt suffisamment fin et d'autre part, selon le type d'analyse, il est parfois nécessaire d'effectuer au préalable une dilution de l'échantillon à analyser, pour ne pas déposer des quantités d'échantillon trop importantes.

Pour effectuer un dépôt en vue de l'électrophorèse, on peut aussi utiliser un masque de dépôt comportant des fentes fines (d'environ 0,3 à environ 0,5 mm) qui permet d'obtenir une bonne focalisation du dépôt nécessaire à une image satisfaisante. Néanmoins, l'utilisation de ce masque avec dépôt des échantillons sur les fentes est difficilement automatisable. Par ailleurs, les applicateurs "automatiques" actuels ne permettent pas d'obtenir une finesse de dépôt équivalente à celle obtenue avec un dépôt manuel effectué dans les fentes fines des masques.

De plus, en raison de la grosseur relativement importante des gouttes, on obtient des bandes assez larges, ce qui rend la séparation des protéines difficile.

Sur gel d'agarose, on peut également utiliser des gels moulés comportant des cuvettes, et, dans ce cas, la seringue qui sert au dépôt de l'échantillon doit bien cibler la cuvette. La manipulation est effectuée en général avec succès si la taille des cuvettes est suffisamment grande. Ainsi, pour une cuvette de largeur supérieure ou égale à environ 1 mm, le dispositif est automatisable, mais la résolution n'est pas suffisante. Si la taille des cuvettes est suffisamment petite pour obtenir une bonne résolution, alors le dispositif n'est plus automatisable.

L'invention a pour objet de remédier à ces inconvénients en proposant un dispositif pour l'application d'échantillons biologiques qui, d'une part, permet d'obtenir une finesse de dépôt suffisante pour obtenir une haute résolution et, d'autre part, est automatisable, et qui finalement permet de déposer des quantités modulables d'échantillon (quantités plus ou moins importantes d'échantillon à volonté).

L'invention a également pour objet de fournir un dispositif pour l'application d'échantillons biologiques, qui soit de prix modéré.

L'invention a pour objet un dispositif pour l'application d'échantillons biologiques sur une plaque d'électrophorèse, notamment gel d'électrophorèse, caractérisé en ce qu'il comprend :
un ou plusieurs éléments plans, en matériau poreux sur lesquels un échantillon biologique est susceptible d'être déposé, ces éléments plans étant indépendants les uns des autres, fixés à des moyens communs de rigidification qui les maintiennent dans un même plan, ces éléments étant en saillie par rapport aux moyens de rigidification, - ces éléments étant ci-après dénommés "éléments en saillie", chacun des susdits éléments en saillie comportant des moyens empéchant l'échantillon biologique de s'étaler a la surface du (des) susdits éléments en saillie. Les moyens de rigidification dont il est question ci-dessus sont tels que leur forme et leurs dimensions sont compatibles avec celles des éléments en saillie, de façon à permettre le maintien d'une partie de chaque élément en saillie par les moyens de rigidification dans des conditions telles que les moyens de rigidification ne gênent pas la mise en contact des éléments en saillie avec la surface plane de la plaque d'électrophorèse et le dépôt de l'échantillon biologique sur la plaque d'électrophorèse.

Les moyens qui empêchent un échantillon biologique déposé sur l'un des susdits éléments en saillie de s'étaler sur la, surface dudit élément en saillie, peuvent le cas échéant l'empêcher d'exsuder sur la surface dudit élément en saillie, sans empêcher l'échantillon biologique déposé de progresser jusqu'à l'extrémité dudit élément en saillie, destinée à être mise en contact avec la plaque d'électrophorèse.

Les susdits éléments en saillie sont tels qu'ils ont tous au moins un point susceptible d'être mis en contact avec la surface plane de la plaque d'électrophorèse afin de déposer sur ladite plaque un ou plusieurs échantillons biologiques. Chaque échantillon biologique étant préalablement déposé sur un élément des éléments en saillie, les différents points de contact sont susceptibles d'être mis simultanément en contact avec la surface de ladite plaque selon un alignement, lorsque la susdite membrane poreuse, ou les susdits moyens de rigidification, sont disposés dans un plan incliné ou perpendiculaire par rapport à la surface de la susdite plaque.

Le dispositif de l'invention permet d'effectuer des dépôts d'échantillons biologiques, notamment sur gel d'agarose, d'acrylamide ou sur membrane d'acétate de cellulose.

La membrane poreuse et les éléments en saillie ont avantageusement une épaisseur d'environ 50 µ à environ 200 µ, et de préférence d'environ 100 à environ 150 µ.

Le dispositif de l'invention est tel qu'il permet d'effectuer le dépôt d'un échantillon biologique sans transfert de liquide, mais par diffusion (des constituants contenus dans l'échantillon biologique) entre deux milieux solides qui sont respectivement l'ensemble des éléments en saillie et la plaque d'électrophorèse, chacun étant à saturation de liquide pour éviter le transfert de l'un vers l'autre. Dans ces conditions, des dépôts très fins peuvent être obtenus, notamment si la zone de contact entre l'extrémité des éléments en saillie (c'est-à-dire la section des éléments en saillie) et la plaque possède une dimension très réduite.

Le dispositif pour l'application d'échantillons biologiques est de préférence destiné à l'application desdits échantillons sur un gel d'électrophorèse.

L'échantillon biologique est constitué par une solution contenant des composants à déterminer. A titre d'exemple, on peut citer le sérum, l'urine, etc...

Le dispositif de l'invention comporte donc une membrane poreuse, dont les pores peuvent absorber l'échantillon, et peuvent absorber également éventuellement un liquide d'humidification.

Le volume d'échantillon biologique déposé sur le gel d'électrophorèse varie de 0 à la totalité du volume d'échantillon biologique déposée.

Pour des taux de porosité d'environ 50% à environ 90%, le volume du dépôt d'un échantillon biologique sur un élément en saillie est d'environ 0,05.10⁻² à environ 1.10⁻² µl/mm et par µ d'épaisseur du matériau poreux, de préférence d'environ 0,15.10⁻² à environ 0,5.10⁻² µl/mm et par µ d'épaisseur du matériau poreux.

En ce qui concerne le gel d'électrophorèse, celui-ci se trouve toujours à saturation de liquide selon la définition précédente puisque même s'il subit une déshydratation partielle, il y a effondrement des pores, c'est-à-dire diminution du volume des pores qui sont néanmoins toujours occupés par du liquide.

Dans le cas où le matériau poreux est à saturation du liquide, le passage à partir de l'extrémité des éléments en saillie sur le gel des substances contenues dans une partie du volume (déposé sur l'extrémité des éléments en saillie) de l'échantillon biologique se fait donc par diffusion, et non par transfert de la solution (contenant les substances à déterminer) que représente l'échantillon biologique.

Dès que le matériau poreux n'est pas en saturation de liquide, il va se produire, par un phénomène de capillarité, un transfert de liquide du gel vers le matériau poreux, ce qui va à l'encontre de la diffusion de ces espèces moléculaires dans le gel. Ce phénomène est d'autant plus important que le matériau poreux est plus éloigné de la saturation.

On peut évaluer qu'à partir du moment où la quantité de liquide imprégnant le matériau poreux est inférieure ou égale à 90% de la quantité de liquide l'imprégnant à saturation, plus aucun dépôt ne pourra être effectué.

Par commodité de langage, on désigne, dans ce qui précède et ce qui suit, par "quantité d'échantillons biologiques déposée sur la plaque ou sur le gel", la quantité de substances à analyser contenues dans une partie du volume de l'échantillon biologique déposé et qui a diffusé dans le gel.

Les quantités déposées sur le gel d'électrophorèse des substances à déterminer contenues dans une partie du volume de l'échantillon biologique doivent être, d'une part, telles que les substances à déterminer se retrouvent dans la plaque ou le gel en quantité suffisante pour que leur détection puisse être effectuée et, d'autre part, telles que les substances à déterminer ne soient pas supérieures à la quantité au-delà de laquelle la résolution devient insuffisante.

En ce qui concerne la quantité des substances à analyser, déposées sur la plaque ou le gel, elle dépend d'une part à la fois du temps de refoulement ou de concentration de l'élément biologique sur l'extrémité en saillie, et, d'autre part, de la durée d'application de l'extrémité de l'élément en saillie sur la plaque ou sur le gel.

Elle dépend également des substances à analyser.

A titre d'exemple pour la détermination de protéines contenues dans un sérum, les quantités à déposer sur le gel varient suivant la sensibilité du colorant utilisé et donc les temps de concentration de l'échantillon biologique à l'extrémité des éléments en saillie et d'application sur la plaque d'électrophorèse varient en fonction des colorants choisis pour effectuer la révélation des protéines recherchées.

Pour un colorant peu sensible, par exemple le rouge Ponceau, avant le dépôt, la phase de concentration par évaporation à l'air de la solution d'échantillon biologique sera par exemple de 5 minutes (échantillon concentré environ 1,8 fois) avec un temps d'application sur le gel d'une minute. Dans ces conditions, la quantité de substance à analyser déposée par mm est celle contenue dans environ 0,06 µl d'échantillon initial.

Pour un colorant plus sensible, par exemple le noir amide, avant le dépôt, la phase de concentration par évaporation à l'air de la solution d'échantillon biologique sera par exemple de 2 minutes (échantillon concentré environ 1,3 fois) avec un temps d'application sur le gel de 30 secondes. Dans ces conditions, la quantité de substance à analyser déposée par mm est celle contenue dans environ 0,02 µl d'échantillon initial.

Pour un colorant encore plus sensible, par exemple le violet acide, avant le dépôt, la phase de concentration par évaporation à l'air de la solution d'échantillon biologique sera par exemple de 2 minutes (échantillon concentré environ 1,3 fois) avec un temps d'application sur le gel de 15 secondes. Dans ces conditions, la quantité de substance à analyser déposée par mm est celle contenue dans environ 0,01 µl d'échantillon initial.

A titre d'exemple, pour un lipidogramme, avant le dépôt, la phase de concentration par évaporation à l'air de la solution d'échantillon biologique sera par exemple de 10 minutes (échantillon concentré environ 2,7 fois) avec un temps d'application sur le gel d'environ 2 minutes. Dans ces conditions, la quantité d'échantillon déposée par mm est celle contenue dans environ 0,12 µl d'échantillon initial.

A titre d'exemple, pour une détermination d'isoenzymes de la LDH (Lacticodeshydrogenase), avant le dépôt, la phase de concentration par évaporation à l'air de la solution d'échantillon biologique sera par exemple de 6 minutes (échantillon concentré environ 2 fois) avec un temps d'application sur le gel de 2 minutes. Dans ces conditions, la quantité d'échantillon déposée par mm est celle contenue dans environ 0,1 µl d'échantillon initial.

En ce qui concerne la porosité, elle se définit par deux paramètres qui sont respectivement le taux de porosité, c'est-à-dire le rapport entre le volume du vide occupé par l'ensemble des pores et le volume total du matériau et d'autre part la taille des pores.

Le taux de porosité du matériau est d'environ 50% à environ 90%.

En ce qui concerne la taille des pores, elle est d'environ 0,2 µ à environ 20 µ, avantageusement d'environ 2 µ à environ avantageusement 10 µ, et avantageusement d'environ 8 µ.

Si les pores sont trop petits, le refoulement et éventuellement la concentration à l'extrémité des éléments en saillie nécessite trop de temps. Si les pores sont trop gros, l'échantillon biologique siphonne au travers des pores (pousse éventuellement par le liquide d'humidification); dans ce cas là, il y a transfert et non pas diffusion et il y a perte de finesse du dépôt.

Cependant, pour éviter le phénomène de siphonnage, on peut intervenir sur la viscosité du liquide d'humidification quand il existe, par exemple en utilisant un polymère présentant avantageusement les mêmes caractéristiques que les polymères définis ci-après, à propos de la netteté du front de l'échantillon biologique.

De façon avantageuse, le polymère utilisé est un polymère hydrosoluble de masse molaire élevée d'environ 2x10⁵ à environ 10⁷, tel que l'hydroxyéthycellulose, le dextran, le polyacrylamide etc... à des concentrations suffisantes.

En ce qui concerne le contact entre les extrémités des éléments en saillie et la plaque, il a lieu, lorsque l'angle entre la plaque et les extrémités en saillie est d'environ 45° à environ 90°, et avantageusement d'environ 90°.

Quand il y a humidification de la membrane poreuse, le liquide d'humidification peut être déposé à chaque utilisation du dispositif à l'aide de tout moyen de dépôt, tel qu'une pipette.

Selon un mode de réalisation avantageux de l'invention, chaque élément en saillie présente une longueur de contact avec le gel d'environ 1 mm à environ 200 mm, de préférence d'environ 1 mm à environ 40 mm, selon laquelle l'échantillon biologique est déposé sur le gel.

Selon un autre mode de réalisation de l'invention, les éléments en saillie sont avantageusement constitués par des bandelettes de forme carrée ou rectangulaire, espacées les unes des autres.

De façon avantageuse, ces bandelettes présentent une longueur de contact avec le gel d'environ 1 à environ 200 mm, notamment d'environ 1 à environ 40 mm, et sont espacées les unes des autres d'une distance au moins égale à environ 0,5 mm.

Les éléments en saillie sont avantageusement constitués de matériau hydrophile, tel que cellulose ou dérivé de la cellulose, comme les esters de cellulose (acétate de cellulose, propionate de cellulose, nitrate de cellulose ...) ou des esters mixtes de cellulose. Il peut également être constitué de nylon ou d'un matériau hydrophobe tel que polyéthylène, polypropylène ou polycarbonate.

D'autres matières poreuses envisageables sont la cellulose régénérée, le fluorure de polyvinylidène, le polysulfone ou le polysulfone modifié.

Le liquide d'humidification est de l'eau ou une solution aqueuse, contenant avantageusement de la glycérine à raison de 0 à environ 50% en volume, ou une solution saline, telle qu'une solution tampon phosphate 0,15 M, tampon trisglycine 0,15 M, tampon citrate 0,15 M, ou une solution contenant NaCl, avantageusement 0,15 M, etc...

Sur les éléments en saillie indépendants, les quantités d'échantillon déposées sont en excès par rapport à la capacité d'absorption de la membrane poreuse. Par exemple, pour un élément de membrane poreuse ayant un taux de porosité de 80%, ayant une surface de 100 mm² et 100 µ d'épaisseur la quantité d'échantillon déposée sera supérieure à 0,8x100x0,1, soit supérieure à 8 µl.

En pratique, on déposera un excès de 1,5 à 3 fois la capacité d'absorption de l'élément de membrane poreuse. Au-delà la barrière hydrophobe, risque de ne plus jouer son rôle avec glissement de la goutte d'échantillon déposé en excès jusqu'à l'extrémité de l'élément en saillie.

Avantageusement, le dispositif comprend un ensemble d'éléments en saillie constitués par des polygones tels que des triangles, des trapèzes, des rectangles, des carrés, des portions de disque ou des portions d'ellipse, ces éléments en saillie étant avantageusement constitués par des bandelettes espacées les unes des autres et de forme carrée ou rectangulaire, ces bandelettes présentant une longueur de contact avec le gel d'environ 1 à environ 200 mm, notamment d'environ 1 à environ 40 mm, et étant espacées les unes des autres d'une distance au moins égale à environ 0,5 mm. L'invention concerne un dispositif dans lequel chaque élément en saillie est équipé de moyens qui empêchent un échantillon biologique, déposé au voisinage de la section transversale supérieure dudit élément en saillie, de s'étaler sur sa surface, ces moyens étant avantageusement constitués par une surface en matériau hydrophobe, telle qu'une bandelette, de préférence fixée sur au moins une partie de la surface des éléments en saillie qui est opposée à la surface dont une partie au moins est maintenue par le support de rigidification, la surface de ce matériau hydrophobe variant avantageusement d'environ le cinquième jusqu'à environ la totalité de l'une des deux surfaces de l'élément en saillie.

Dans le cas d'une bandelette, il y a rétention de l'échantillon biologique.

De façon plus précise, les éléments en saillie sont découpés sous forme de carrés ou de rectangles et fixés sur un support rigide, par exemple par collage. Une bandelette (par exemple de papier autocollant hydrophobe) est positionnée sur la partie centrale des éléments en saillie. Elle joue le rôle d'une barrière entre la partie inférieure et la partie supérieure de chaque élément de membrane poreuse.

L'échantillon est déposé en excès, par exemple au moyen d'une pipette sur la membrane poreuse, au voisinage de la section transversale supérieure ou sur la section transversale supérieure de l'élément en saillie, au-dessus de la bandelette. Cette bandelette positionnée en surface de la membrane poreuse va empêcher l'échantillon de s'étaler en surface de l'élément en saillie, mais ne va pas l'empêcher de progresser par capillarité à l'intérieur de l'élément en saillie et d'atteindre l'extrémité inférieure.

L'échantillon ayant été déposé en excès par rapport à la saturation de la membrane poreuse, la goutte d'échantillon restant au-dessus de la bandelette va jouer le rôle de réserve de liquide d'humidification.

Le susdit dispositif est efficace lorsque la membrane poreuse présente une taille de pores relativement petite, c'est-à-dire inférieure à environ 3 µ.

Quand la taille des pores est importante si le liquide d'humidification n'a pas une viscosité suffisante, le liquide siphonne au travers des pores et l'on obtient un transfert de liquide lors de l'application sur le gel avec des dépôts non focalisés.

Dans le cas de taille de pores supérieure à environ 3 µ, l'invention propose un dispositif dans lequel chaque élément en saillie est équipé de moyens qui empêchent un échantillon biologique, déposé au voisinage de la section transversale supérieure dudit élément en saillie, de s'étaler sur sa surface et d'exsuder sur sa surface, ces moyens étant avantageusement constitués par un matériau hydrophobe, recouvrant les deux surfaces de l'élément en saillie (ainsi qu'éventuellement les sections longitudinales), à l'exclusion des deux sections transversales, avantageusement à raison d'environ 20% à environ 100% des deux surfaces à partir de leur section transversale inférieure, notamment à raison de 100% de la surface maintenue par le support de rigidification et à environ 20% à 100% de la surface opposée à cette surface, et recouvrant notamment la totalité des deux susdites surfaces à l'exclusion des deux sections transversales.

Dans le cas où l'une des surfaces n'est recouverte que partiellement par le matériau hydrophobe, notamment la surface opposée à celle maintenue par le support de rigidification, il est nécessaire que la zone au voisinage de la section transversale inférieure soit recouverte de matériau hydrophobe pour éviter l'exsudation. C'est la raison pour laquelle il est indispensable de préciser que le recouvrement des deux surfaces, lorsqu'il est partiel, a lieu à partir de la section transversale inférieure.

Chaque élément en saillie (de forte porosité) est enduit sur ses deux surfaces d'un revêtement hydrophobe, sauf sur les deux sections transversales.

Dans le cas du revêtement hydrophobe, il y a rétention et cloisonnement de l'échantillon biologique.

Les éléments en saillie sont fixés, en partie au moins, par exemple par collage, sur des moyens de rigidification, tel qu'un support de rigidification.

En d'autres termes, les éléments en saillie sont, à proximité de la section transversale inférieure, enrobés dans une gaine hydrophobe et donc imperméable à l'eau qui peut recouvrir la totalité de l'élément en saillie, à l'exception des deux sections transversales, et éventuellement à l'exception d'une partie de la surface opposée à celle maintenue sur le support de rigidification à condition que cette zone non recouverte ne rejoigne pas la section transversale inférieure, pour éviter l'exsudation de l'échantillon biologique.

L'échantillon est déposé, en excès, par exemple au moyen d'une pipette sur la zone non enduite, avantageusement la section transversale supérieure. Par capillarité, l'échantillon progresse dans l'élément en saillie à l'intérieur de la gaine hydrophobe jusqu'à l'extrémité de l'élément en saillie qui, n'étant pas enduit sur sa section transversale inférieure, permettra, lors de l'application, le dépôt de l'échantillon sur le gel.

Le fait d'avoir recouvert d'une gaine hydrophobe (de quelques microns à quelques dizaines de microns d'épaisseur, et avantageusement d'environ 5 µ à environ 30 µ) la surface de chaque élément en saillie empêche le liquide d'exsuder transversalement par siphonnage de l'intérieur de l'élément en saillie vers sa surface, ce qui entraînerait une accumulation de liquide de l'échantillon à sa surface qui coulerait ensuite à sa surface jusqu'à l'extrémité de l'élément en saillie et donnerait un dépôt important non focalisé.

En imperméabilisant chaque élément en saillie, le seul mouvement du liquide de l'échantillon est le mouvement longitudinal, qui se fait très lentement, étant donné la grande distance à traverser et la perte de charge importante au niveau des pores, alors que le mouvement transversal d'exsudation de liquide qui se produit en absence d'imperméabilisation se fait beaucoup plus aisément (faible distance à traverser puisque la membrane poreuse a une faible épaisseur : 50 à 200 µ).

De plus, en l'absence d'imperméabilisation, la résultante du phénomène d'exsudation se trouve amplifiée à l'extrémité de chaque élément en saillie, puisque la totalité du liquide ayant exsudé transversalement s'y est accumulée par gravité.

La réalisation de cet enrobage hydrophobe peut être obtenue par pulvérisation ou enduction ou pelliculage de chaque élément en saillie de substances hydrophobes telles que silicone, paraffine, polytétrafluoroéthylène, latex, plastique tel que polyéthylène, ou tout revêtement permettant d'imperméabiliser la surface de la membrane poreuse sans y pénétrer, tout en y adhérant.

Le volume du dépôt d'un échantillon biologique sur un élément en saillie est d'environ 6x10⁻⁴ à 27x10⁻⁴ µl/mm² par µ d'épaisseur du matériau poreux, pour un taux de porosité d'environ 50% à environ 90%.

L' invention concerne également un procédé de dépôt tel que défini dans les revendication 19 à 21 un procédé à l'aide d'un dispositif de l'invention, peut être tel que l'une des deux susdites surfaces de chaque élément en saillie est équipée d'une bandelette positionnée au voisinage de la partie centrale de l'élément en saillie et fixée avantageusement sur au moins une partie de la surface des éléments en saillie qui est opposée à la surface dont une partie au moins est maintenue par le support de rigidification, ce qui divise ainsi l'élément en saillie en une partie supérieure et une partie inférieure, la taille de la bandelette variant avantageusement d'environ le cinquième jusqu'à environ la totalité de l'une des deux surfaces de l'élément en saillie,
- on dépose un échantillon biologique en excès sur la susdite partie supérieure de l'élément en saillie, notamment au voisinage de la section transversale supérieure, l'échantillon biologique ainsi déposé ne s'étalant pas sur la surface de l'élément en saillie et progressant à l'intérieur de l'élément en saillie et atteignant la section transversale inférieure dudit élément pour être déposé sur la plaque d'électrophorèse.

Dans ce cas, la concentration de l'échantillon biologique peut être effectuée par évaporation à l'air d'une partie du liquide de l'échantillon biologique.

Pour réaliser le procédé à l'aide d'un dispositif de l'invention, chaque élément en saillie peut être recouvert d'un matériau hydrophobe sur ses deux surfaces, et éventuellement sur les deux sections longitudinales, à l'exclusion des deux sections transversales,
ce matériau hydrophobe étant tel qu'il recouvre environ 20% à environ 100% des deux surfaces à partir de leur section transversale inférieure, notamment à raison de 100% de la surface maintenue par le support de rigidification et d'environ 20% à environ 100% de la surface opposée à cette surface, éventuellement les deux sections longitudinales, et qu'il recouvre notamment la totalité des deux surfaces à l'exception des deux sections transversales.

On dépose un échantillon biologique, en excès, sur une zone de l'élément en saillie non recouverte de matériau hydrophobe, avantageusement au Voisinage de la section transversale supérieure, et par capillarité, l'échantillon progressant longitudinalement à l'intérieur de la gaine hydrophobe jusqu'à la section transversale inférieure de l'élément en saillie qui n'est pas enduite, le dépôt de l'échantillon biologique est effectué sur la plaque d'électrophorèse.

Dans cette configuration, on ne peut pas concentrer l'échantillon par évaporation du liquide de l'échantillon étant donné que l'échantillon situé à proximité de l'extrémité de chaque élément en saillie se trouve à l'abri de l'évaporation (seule la section transversale de l'extrémité pouvant être à l'air libre). Pour déposer des quantités variables d'échantillon, le seul paramètre sur lequel on pourra intervenir est le temps d'application sur le gel.

L'invention peut être appliquée à un procédé de dépôt non suivi de migration électrophorétique, tel que le "cross-dot" (dépôts croisés) ou un procédé d'immunofixation.

Dans le cas du cross-dot, on opère comme suit :
- on effectue le dépôt conformément à ce qui a été dit précédemment, sur une plaque, d'un échantillon biologique à l'aide des éléments en saillie, ce dépôt n'étant pas suivi d'électrophorèse,
- puis, dans une direction sensiblement perpendiculaire, on effectue le dépôt d'un réactif croisant le dépôt ci-dessus,
- on laisse incuber,
- et on révèle le résultat de la réaction échantillon biologique-réactif éventuellement formée.

Dans le cas de l'immunofixation, on opère comme suit :
- on dépose un échantillon biologique comme indiqué ci-dessus,
- on laisse la migration électrophorétique se produire,
- et lorsque la migration est terminée, on effectue le dépôt d'un réactif dans une direction sensiblement perpendiculaire au premier dépôt, sur une distance couvrant l'ensemble de la migration électrophorétique,
- on laisse incuber,
- puis on révèle le résultat de la réaction échantillon biologique-réactif éventuellement formée.

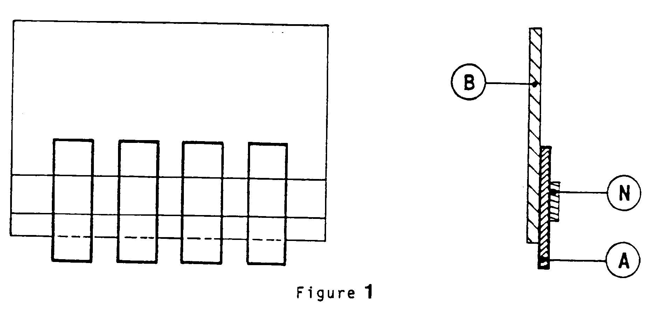

La Figure 1 représente une vue en plan et en coupe d'un dispositif de l'invention comportant un ensemble d'éléments en saillie (A) en matériau poreux, maintenus dans le même plan par l'intermédiaire d'un support de rigidification (B). Dans la partie médiane de chacun des éléments est appliquée une bandelette (N) en matériau hydrophobe.

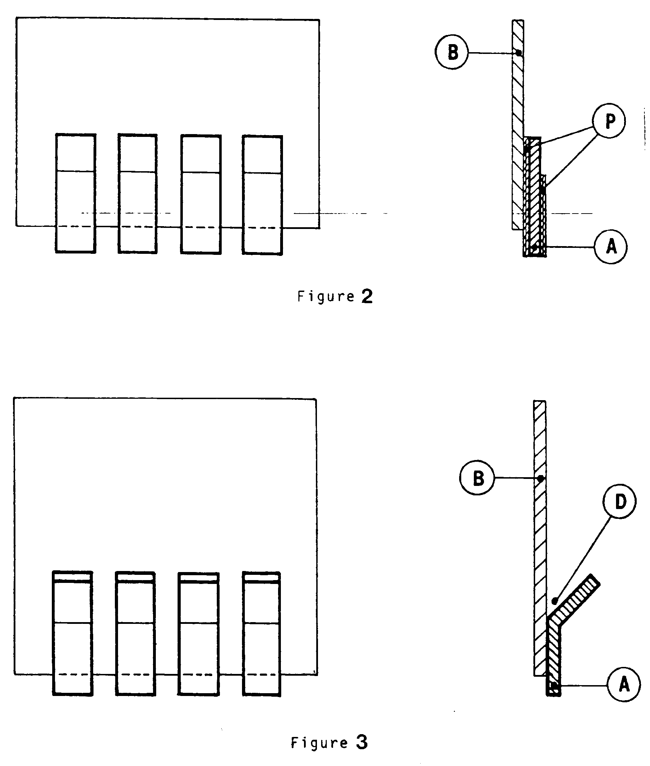

La Figure 2 représente une vue en plan et en coupe d'un dispositif de l'invention comportant un ensemble d'éléments en saillie (A) en matériau poreux maintenus dans le même plan par l'intermédiaire d'un support de rigidification (B). Chacun des éléments en saillie est revêtu d'un revêtement hydrophobe (P) à la fois sur la surface appliquée contre le support, ainsi que sur celle opposée à cette dernière, à l'exception des deux sections transversales.
   Sur la Figure 2, à titre d'exemple, le matériau hydrophobe ne recouvre pas la totalité de la surface de l'élément opposée à celle appliquée contre le support.
La figure 3 représente une vue en plan et en coupe d'un dispositif de l'invention comportant un ensemble d'éléments en saillie A en matériau poreux maintenus dans un même plan par l'intermédiaire d'un support de rigidification B et cela par exemple par collage sur une portion inférieure de leur surface. La partie non encollée des éléments en saillie en matériau poreux sont pliés par exemple à 45° et l'espace libéré entre les éléments en saillie A et le support rigide B forme le réservoir D où est déposé l'échantillon.

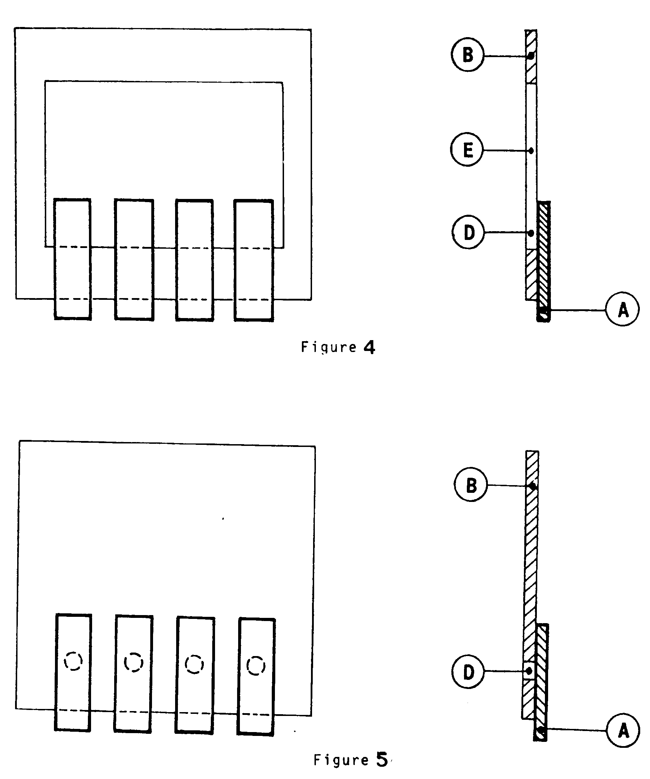

La figure 4 représente une vue en plan et en coupe d'un dispositif de l'invention comportant un ensemble d'éléments en saillie A maintenus dans un même plan par exemple par collage par l'intermédiaire d'un support de rigidification B. Dans ce cas, le support de rigidification B possède une ouverture E par exemple rectangulaire de telle sorte que la partie supérieure des éléments A se trouve située au niveau de cette ouverture. Le réservoir D où est déposé l'échantillon est alors constitué par la partie horizontale inférieure de l'ouverture E du support B et par la partie non encollée de l'élément A.
La figure 5 représente une vue en plan et en coupe d'un dispositif de l'invention comportant un ensemble d'éléments en saillie A maintenus dans un même plan par l'intermédiaire d'un support de rigidification B et cela par exemple par encollage. Au niveau de chacun des éléments A, le support B comporte un orifice D. Le réservoir D où est déposé l'échantillon est constitué dans ce cas par cet orifice et la portion d'élément A en regard de cet orifice.

L'invention est illustrée par les exemples ci-après, qui n'ont aucune valeur limitative et qui font référence aux figures qui, pour des raisons de schématisation, comportent quatre éléments en saillie, étant entendu que les dispositifs utilisés dans les exemples, lorsqu'ils font référence à une figure particulière, peuvent comporter un nombre d'éléments en saillie différent de quatre (par exemple un, six ou huit).

### EXEMPLE 1 : PROTEINOGRAMME D'UN SERUM AVEC COLORATION AU VIOLET ACIDE :

On utilise un dispositif de l'invention comportant quatre éléments en saillie indépendants en matériau poreux (acétate de cellulose), ayant une dimension de pores de 1,2 µ et une épaisseur de 100 µ, ces éléments en saillie étant rectangulaires, de hauteur 12 mm et de largeur 7 mm, espacés de 2 mm, qui sont collés sur un support rigide (cf. Figure 1).

Une bandelette N de papier hydrophobe est collée en position centrale.

L'ensemble du dispositif étant en position horizontale, on dépose au moyen d'une pipette 15 µl d'échantillon par élément en saillie sur la zone de l'élément en saillie située au-delà de la bandelette N par rapport à l'extrémité qui est ultérieurement appliquée sur le gel.

Après environ 1 minute d'attente, l'échantillon a rejoint l'extrémité par progression par capillarité dans la membrane poreuse.

Après 2 minutes d'attente supplémentaire pour concentration par évaporation à l'air libre, le dispositif est appliqué pendant 20 secondes sur un gel d'agarose destiné à l'analyse des protéines.

Après migration, le gel est fixé, séché et coloré au violet acide selon les techniques habituelles.

### EXEMPLE 2 : PROTEINOGRAMME D'UN SERUM AVEC COLORATION AU NOIR AMIDE :

On utilise une membrane poreuse en acétate de cellulose ayant une dimension de pore de 8 µ et une épaisseur de 140 µ.

Le dispositif de l'invention comporte quatre éléments en saillie (en matériau poreux) indépendants, de forme carrée, de côté 7 mm, espacés de 2 mm, chaque élément en saillie étant recouvert d'un revêtement d'un film plastique de 10 µ d'épaisseur, excepté sur la section transversale inférieure de l'élément en saillie et sur une zone de 3 mm de hauteur située à proximité de la section transversale supérieure (cf. Figure 2).

L'ensemble étant en position horizontale, on dépose au moyen d'une pipette 12 µl d'échantillon sur la zone non enduite par le revêtement en plastique.

Après environ 30 secondes, le liquide de l'échantillon a atteint par capillarité l'extrémité des éléments poreux.

Le dispositif est appliqué alors pendant 30 secondes sur un gel d'agarose destiné à l'analyse des protéines par électrophorèse.

Après migration, le gel est fixé, séché et coloré au noir amide selon les techniques habituelles.

## Revendications

1. Dispositif pour l'application d'échantillons biologiques sur une plaque d'électrophorèse, caractérisé en ce qu'il comprend un ou plusieurs éléments plans en matériau poreux indépendants les uns des autres, fixés à des moyens communs de rigidification qui les maintiennent dans un même plan, ces éléments étant en saillie par rapport aux moyens de rigidification, chacun des susdits éléments en saillie comportant des moyens empêchant l'échantillon biologique de s'étaler à la surface du(des) susdits éléments en saillie,
les susdits éléments en saillie étant tels qu'ils ont tous au moins un point susceptible d'être mis en contact avec la surface plane de la plaque d'électrophorèse afin de déposer sur ladite plaque un ou plusieurs échantillons biologiques, chaque échantillon biologique étant préalablement déposé sur un élément des éléments en saillie, ces différents points étant susceptibles d'être mis simultanément en contact avec la surface de ladite plaque selon un alignement, lorsque les susdits éléments plans en matériau poreux, ou les susdits moyens de rigidification, sont disposés dans un plan incliné ou perpendiculaire par rapport à la surface à la susdite plaque.

2. Dispositif selon la revendication 1, caractérisé en ce que les éléments en saillie en matériau poreux ont une épaisseur de 50 µ à 200 µ.

3. Dispositif selon la revendication 2, caractérisé en ce que les des éléments en saillie ont une forme choisie dans le groupe constitué par des polygones, tels que des triangles, des trapèzes, des rectangles, des carrés, des portions de disque ou des portions d'ellipse.

4. Dispositif selon l'une quelconque des revendications 1 à 3, caractérisé en ce que les éléments en saillie sont constitués par des bandelettes espacées les unes des autres et de forme carrée ou rectangulaire, ces bandelettes présentant une longueur de contact avec le gel de 1 à 200 mm.

5. Dispositif selon la revendication 4, caractérisé en ce que les bandelettes présentent une longueur de contact avec le gel de 1 à 40 mm.

6. Dispositif selon la revendication 4 ou 5, caractérisé en ce que les bandelettes sont espacées les unes des autres d'une distance au moins égale à 0,5 mm.

7. Dispositif selon l'une quelconque des revendications 1 à 6, caractérisé en ce que le matériau poreux est hydrophile.

8. Dispositif selon l'une quelconque des revendications 1 à 7, caractérisé en ce que le matériau poreux est choisi parmi la cellulose ou ses dérivés.

9. Dispositif selon la revendication 8, caractérisé en ce que le matériau poreux est choisi parmi les esters de cellulose ou les esters mixtes de cellulose.

10. Dispositif selon la revendication 8, caractérisé en ce que le matériau poreux est choisi parmi l'acétate de cellulose, le propionate de cellulose ou le nitrate de cellulose.

11. Dispositif selon l'une quelconque des revendications 1 à 5, caractérisé en ce que les éléments en saillie sont constitués par le fluorure de polyvinylidène, le polysulfone ou le polysulfone modifié.

12. Dispositif selon l'une quelconque des revendications 1 à 6, caractérisé en ce que le matériau poreux est le nylon.

13. Dispositif pour l'application d'échantillons biologiques sur une plaque d'électrophorèse, caractérisé en ce qu'il comprend:
- un ou plusieurs éléments plans en matériau poreux indépendants les uns des autres, respectivement propres à recevoir le dépôt d'échantillons biologiques, les susdits éléments étant maintenus dans un même plan par l'intermédiaire d'un support de rigidification et,
- un réservoir formé par un espace libéré entre les éléments en saillie et le support de rigidification.

14. Dispositif pour l'application d'échantillons biologiques sur une plaque d'électrophorèse, caractérisé en ce qu'il comprend:
- un ou plusieurs éléments plans en matériau poreux indépendants les uns des autres, respectivement propres à recevoir le dépôt d'échantillons biologiques, les susdits éléments étant maintenus dans un même plan par l'intermédiaire d'un support de rigidification et,
- un réservoir formé par une ouverture dans le support de rigidification et par la partie non encollée des éléments en saillie.

15. Dispositif pour l'application d'échantillons biologiques sur une plaque d'électrophorèse, caractérisé en ce qu'il comprend:
- un ou plusieurs éléments plans en matériau poreux indépendants les uns des autres, respectivement propres à recevoir le dépôt d'échantillons biologiques, les susdits éléments étant maintenus dans un même plan par l'intermédiaire d'un support de rigidification et,
- un réservoir formé par une portion des susdits éléments en saillie et un orifice présent dans le support de rigidification en regard de ladite portion d'élément en saillie.

16. Dispositif selon l'une quelconque des revendications 1 à 3 ou 7 à 15, dans lequel chaque élément en saillie présente une longueur de contact avec le gel de 1 mm à 200 mm, selon laquelle l'échantillon biologique est déposé sur le gel.

17. Dispositif selon la revendication 16, dans lequel chaque élément en saillie présente une longueur de contact avec le gel de 1 mm à 40 mm, selon laquelle l'échantillon biologique est déposé sur le gel.

18. Dispositif selon l'une quelconque des revendications 1 à 3 ou 7 à 17, caractérisé en ce que chacun des éléments en saillie est séparé d'une distance de 0,5 mm.

19. Dispositif selon l'une quelconque des revendications 1 à 18, caractérisé en ce que chaque élément en salle est équipé de moyens qui empêchent un échantillon biologique, déposé au voisinage de la section transversale supérieure dudit élément en saillie, de s'étaler sur sa surface, ces moyens étant constitués par une surface en matériau hydrophobe.

20. Dispositif selon la revendication 19, caractérisé en ce que les moyens empêchant l'étalement de l'échantillon biologique à la surface des éléments en saillie sont constitués par une bandelette en matériau hydrophobe.

21. Dispositif selon la revendication 19, caractérisé en ce que les moyens empêchant l'étalement de l'échantillon biologique à la surface des éléments en saillie sont constitués par un matériau hydrophobe recouvrant les deux surfaces de l'élément en saillie à raison de 20 à 100 % des deux surfaces à partir de leur section transversale inférieure.

22. Procédé de dépôt d'un ou plusieurs échantillons biologiques sur une plaque d'électrophorèse, caractérisé par :
- le dépôt des échantillons biologiques sur un ou plusieurs éléments en salle en matériau poreux, lesdits éléments en saillie étant indépendants les uns des autres, fixés à des moyens communs de rigidification qui les maintiennent dans un même plan,
chacun des susdits éléments en saillie comportant des moyens empêchant l'échantillon biologique de s'étaler à la surface du (des) susdits éléments en saillie,
- la mise en contact des éléments en saillie avec la surface plane de la plaque d'électrophorèse, les susdits éléments en salle étant disposés dans un plan incliné ou perpendiculaire par rapport à la surface de ladite plaque.

23. Procédé selon la revendication 22, caractérisé en ce que la plaque d'électrophorèse est un gel d'électrophorèse.

24. Procédé selon la revendication 22, caractérisé en ce que l'échantillon est déposé en excès par rapport à la saturation en liquide de la membrane poreuse.

## Claims

1. A device for applying biological samples to an electrophoresis plate, the device being characterized in that it comprises one or more mutually independent plane elements of porous material fixed to common stiffening means which hold them in a common plane, said elements projecting relative to the stiffening means, each of said projecting elements having means for preventing the biological sample from spreading on the surface of said projecting element(s),
said projecting elements being such that they all have at least one point suitable for being put into contact with the plane surface of the electrophoresis plate in order to deposit one or more biological samples on said plate, each biological sample being previously deposited on one of the projecting elements, said various points being suitable for being put simultaneously into contact with the surface of said plate in an alignment while said plane elements of porous material or said stiffening means are disposed in a plane that is inclined or perpendicular relative to the surface of said plate.

2. A device according to claim 1, characterized in that the projecting elements of porous material have a thickness of 50 µ to 200 µ.

3. A device according to claim 2, characterized in that the projecting elements are of a shape selected from the group constituted by polygons, such as triangles, trapeziums, rectangles, squares, portions of a disk, or portions of an ellipse.

4. A device according to any one of claims 1 to 3, characterized in that the projecting elements are constituted by mutually spaced apart strips of square or rectangular shape, said strips having a length in contact with the gel of 1 mm to 200 mm.

5. A device according to claim 4, characterized in that the strips have a length in contact with the gel of 1 mm to 40 mm.

6. A device according to claim 4 or 5, characterized in that the strips are spaced apart from one another by a distance of at least 0.5 mm.

7. A device according to any one of claims 1 to 6, characterized in that the porous material is hydrophilic.

8. A device according to any one of claims 1 to 7, characterized in that the porous material is selected from cellulose and derivatives thereof.

9. A device according to claim 8, characterized in that the porous material is selected from cellulose esters and mixed cellulose esters.

10. A device according to clam 8, characterized in that the porous material is selected from cellulose acetate, cellulose propionate, and cellulose nitrate.

11. A device according to any one of claims 1 to 5, characterized in that the projecting elements are constituted by polyvinylidene fluoride, polysulfone, or modified polysulfone.

12. A device according to any one of claims 1 to 6, characterized in that the porous material is nylon.

13. A device for applying biological samples onto an electrophoresis plate, the device being characterized in that it comprises:
• one or more mutually independent plane elements of porous material respectively suitable for receiving deposits of biological samples, said elements being held in a common plane by means of a stiffening support; and
• a reservoir formed by a space left empty between said projecting elements and the stiffening support.

14. A device for applying biological samples onto an electrophoresis plate, characterized in that it comprises:
• one or more mutually independent plane elements of porous material respectively suitable for receiving deposits of biological samples, said elements being held in a common plane by means of a stiffening support; and
• a reservoir formed by an opening in the stiffening support and by the non-coated portions of the projecting elements.

15. A device for applying biological samples onto an electrophoresis plate, characterized in that it comprises:
• one or more mutually independent plane elements of porous material respectively suitable for receiving deposits of biological samples, said elements being held in a common plane by means of a stiffening support; and
• a reservoir formed by a portion of each of said projecting elements and a corresponding orifice present in the stiffening support in register with said portion of the projecting element.

16. A device according to any one of claims 1 to 3 or 7 to 15, in which each projecting element has a length of contact with the gel of 1 mm to 200 mm, whereby the biological sample is deposited on the gel.

17. A device according to claim 16, in which each projecting element has a length of contact with the gel of 1 mm to 40 mm, whereby the biological sample is deposited on the gel.

18. A device according to any one of claims 1 to 3 or 7 to 17, characterized in that each of the projecting elements is separated by a distance of 0.5 mm.

19. A method of depositing one or more biological samples on an electrophoresis plate, the method being characterized by:
• biological samples being deposited on one or more projecting elements of porous material, said projecting elements being mutually independent, and fixed to common stiffening means which hold them in a common plane,
each of said projecting element having means preventing the biological samples from spreading on the surface of said projecting element(s);
• the projecting elements are put into contact with the plane surface of the electrophoresis plate, said projecting elements being disposed in a plane that is inclined or is perpendicular relative to the surface of said plate.

20. A method according to claim 19, characterized in that the electrophoresis plate is an electrophoresis gel.

21. A method according to claim 19, characterized in that the sample is deposited in excess compared with the porous membrane being saturated in liquid.

22. A device according to any one of claims 1 to 18, characterized in that each projecting element is fitted with means preventing a biological sample deposited in the vicinity of the top cross-section of said projecting element from spreading over its surface, said means being constituted by a surface of hydrophobic material.

23. A device according to claim 22, characterized in that the means preventing the biological sample from spreading on the surface of the projecting elements are constituted by a strip of hydrophobic material.

24. A device according to claim 22, characterized in that the means preventing the biological sample from spreading on the surface of the projecting elements are constituted by a hydrophobic material covering both surfaces of the projecting element, occupying 20% to 100% of the two surfaces extending from their bottom cross-sections.

## Patentansprüche

1. Vorrichtung zum Aufbringen von biologischen Proben auf eine Elektrophoreseplatte, dadurch gekennzeichnet, daß sie eines oder mehrere ebene, voneinander unabhängige Elemente aus porösem Material aufweist, die an gemeinsamen Versteifungsmitteln befestigt sind, die sie in einer selben Ebene halten, wobei die Elemente in Bezug auf die Versteifungsmittel vorstehen, wobei jedes der vorstehenden Elemente Mittel aufweist, die verhindern, daß die biologische Probe sich auf der Oberfläche des vorstehenden Elements (der vorstehenden Elemente) ausbreitet,
wobei die vorstehenden Elemente derart sind, daß sie alle mindestens einen Punkt aufweisen, der mit der ebenen Oberfläche der Elektrophoreseplatte in Kontakt gebracht werden kann, um auf die Platte eine oder mehrere biologische Proben aufzugeben, wobei jede biologische Probe zuvor auf ein Element der vorstehenden Elemente aufgegeben wurde, wobei bei einer Ausrichtung diese verschiedenen Punkte gleichzeitig mit der Oberfläche der Platte in Kontakt gebracht werden können, wenn die ebenen Elemente aus porösem Material oder die Versteifungsmittel in einer Ebene angeordnet sind, die in Bezug auf die Oberfläche der Platte geneigt oder senkrecht dazu sind.

2. Vorrichtung nach Anspruch 1, dadurch gekennzeichnet, daß die vorstehenden Elemente aus porösem Material eine Dicke von 50 µ bis 200 µ aufweisen.

3. Vorrichtung nach Anspruch 2, dadurch gekennzeichnet, daß die vorstehenden Elemente eine Form aufweisen, die ausgewählt ist aus der Gruppe bestehend aus Polygonen, wie Dreiecken, Trapezen, Rechtecken, Quadraten, Kreissegmenten oder Ellipsensegmenten.

4. Vorrichtung nach einem der Ansprüche 1 bis 3, dadurch gekennzeichnet, daß die vorstehenden Elemente durch voneinander in einem Abstand angeordnete Streifen und in quadratischer oder rechteckiger Form gebildet sind, wobei die Streifen eine Kontaktlänge mit dem Gel von 1 bis 200 mm aufweisen.

5. Vorrichtung nach Anspruch 4, dadurch gekennzeichnet, daß die Streifen eine Kontaktlänge mit dem Gel von 1 bis 40 mm aufweisen.

6. Vorrichtung nach Anspruch 4 oder 5, dadurch gekennzeichnet, daß die Streifen voneinander durch einen Abstand von mindestens gleich 0,5 mm getrennt sind.

7. Vorrichtung nach einem der Ansprüche 1 bis 6, dadurch gekennzeichnet, daß das poröse Material hydrophil ist.

8. Vorrichtung nach einem der Ansprüche 1 bis 7, dadurch gekennzeichnet, daß das poröse Material ausgewählt ist aus Cellulose oder seinen Derivaten.

9. Vorrichtung nach Anspruch 8, dadurch gekennzeichnet, daß das poröse Material ausgewählt ist aus Celluloseestern oder gemischten Celluloseestern.

10. Vorrichtung nach Anspruch 8, dadurch gekennzeichnet, daß das poröse Material ausgewählt ist aus Celluloseacetat, Cellulosepropionat oder Cellulosenitrat.

11. Vorrichtung nach einem der Ansprüche 1 bis 5, dadurch gekennzeichnet, daß die vorstehenden Elemente aus Polyvinylidenfluorid, Polysulfon oder modifiziertem Polysulfon gebildet sind.

12. Vorrichtung nach einem der Ansprüche 1 bis 6, dadurch gekennzeichnet, daß das poröse Material Nylon ist.

13. Vorrichtung zum Aufbringen von biologischen Proben auf eine Elektrophoreseplatte, dadurch gekennzeichnet, daß sie umfaßt:
- eines oder mehrere ebene, voneinander unabhängige Elemente aus porösem Material, die jeweils geeignet sind, eine Aufgabe von biologischen Proben aufzunehmen, wobei die Elemente durch einen dazwischen angeordneten Versteifungsträger in einer selben Ebene gehalten sind und
- ein Reservoir ausgebildet durch einen freien Raum zwischen den vorstehenden Elementen und dem Versteifungsträger.

14. Vorrichtung zum Aufbringen von biologischen Proben auf eine Elektrophoreseplatte, dadurch gekennzeichnet, daß sie umfaßt:
- eines oder mehrere ebene, voneinander unabhängige Elemente aus porösem Material, die jeweils geeignet sind, eine Aufgabe von biologischen Proben aufzunehmen, wobei die Elemente durch einen dazwischen angeordneten Versteifungsträger in einer selben Ebene gehalten sind und
- ein Reservoir ausgebildet durch eine Öffnung im Versteifungsträger und den nicht eingeklebten Teil der vorstehenden Elemente.

15. Vorrichtung zum Aufbringen von biologischen Proben auf eine Elektrophoreseplatte, dadurch gekennzeichnet, daß sie umfaßt:
- eines oder mehrere ebene, voneinander unabhängige Elemente aus porösem Material, die jeweils geeignet sind, eine Aufgabe von biologischen Proben aufzunehmen, wobei die Elemente durch einen dazwischen angeordneten Versteifungsträger in einer selben Ebene gehalten sind und
- ein Reservoir ausgebildet durch einen Teil der vorstehenden Elemente und eine Öffnung, die im Versteifungsträger vorhanden ist, gegenüber dem genannten Teil des vorstehenden Elements.

16. Vorrichtung nach einem der Ansprüche 1 bis 3 oder 7 bis 15, in der jedes vorstehende Element eine Kontaktlänge mit dem Gel von 1 mm bis 200 mm aufweist, über die die biologische Probe auf das Gel aufgegeben wird.

17. Vorrichtung nach Anspruch 16, in der jedes vorstehende Element eine Kontaktlänge mit dem Gel von 1 mm bis 40 mm aufweist, über die die biologische Probe auf das Gel aufgegeben wird.

18. Vorrichtung nach einem der Ansprüche 1 bis 3 oder 7 bis 17, dadurch gekennzeichnet, daß jedes der vorstehenden Elemente vom anderen durch einen Abstand von 0,5 mm getrennt ist.

19. Verfahren zum Aufgeben von einer oder mehreren biologischen Proben auf eine Elektrophoreseplatte, gekennzeichnet durch:
- Aufgeben von biologischen Proben auf ein oder mehrere vorstehende Elemente aus porösem Material, wobei die vorstehenden Elemente voneinander unabhängig sind, an gemeinsamen Versteifungsmitteln befestigt sind, die sie in einer selben Ebene halten,
wobei jedes der vorstehenden Elemente Mittel aufweist, die verhindern, daß sich die biologische Probe auf der Oberfläche des vorstehenden Elements (der vorstehenden Elemente) ausbreitet,
- Inkontaktbringen der vorstehenden Elemente mit der ebenen Oberfläche der Elektrophoreseplatte, wobei die vorstehenden Elemente in einer Ebene angeordnet sind, die geneigt oder senkrecht in Bezug auf die Oberfläche der Platte ist.

20. Verfahren nach Anspruch 19, dadurch gekennzeichnet, daß die Elektrophoreseplatte ein Elektrophoresegel ist.

21. Verfahren nach Anspruch 19, dadurch gekennzeichnet, daß die Probe in Bezug auf die Flüssigkeitssättigung der porösen Membran im Überschuß aufgegeben wird.

22. Vorrichtung nach einem der Ansprüche 1 bis 18, dadurch gekennzeichnet, daß jedes vorstehende Element mit Mitteln ausgerüstet ist, die verhindern, daß eine biologische Probe, die neben dem oberen Querabschnitt des vorstehenden Elements aufgegeben ist, sich über die Oberfläche ausbreitet, wobei diese Mittel durch eine Oberfläche aus hydrophobem Material gebildet sind.

23. Vorrichtung nach Anspruch 22, dadurch gekennzeichnet, daß die Mittel, die die Ausbreitung der biologischen Probe auf der Oberfläche der vorstehenden Elemente verhindern, durch einen Streifen aus hydrophobem Material gebildet sind.

24. Vorrichtung nach Anspruch 22, dadurch gekennzeichnet, daß die Mittel, die die Ausbreitung der biologischen Probe auf der Oberfläche der vorstehenden Elemente verhindern, durch ein hydrophobes Material gebildet sind, das die beiden Flächen des vorstehenden Elements zu 20 bis 100 % der beiden Flächen ausgehend von ihrem unteren Querabschnitt bedeckt.
